# EUROPEAN PATENT APPLICATION

(11) **EP 1 993 275 A1**
(43) Date of publication of application: **19.11.2008**
(21) Application number: 07714770.0
(22) Date of filing: 22.02.2007
(51) Int. Cl.: H04M 3/56, H04M 3/00, H04M 11/00, H04Q 7/38

(54) **PoC COMMUNICATION SYSTEM AND RIGHT-TO-SPEAK CONTROL METHOD IN THE SYSTEM**

(30) Priority: 03.03.2006 JP 2006057753
(71) Applicant: NEC Corporation, Minato-ku Tokyo 108-8001 (JP)
(72) Inventor: SHIBUYA, Atsushi, Minato-ku, Tokyo 1088001 (JP)
(74) Representative: Betten & Resch
(86) International application number: PCT/JP2007/053272
(87) International publication number: WO 2007/105445

(57) **Abstract**

A system and method are realized in which it is possible to control right-to-speak according to a setting of an organizer, in PoC communication. In a group management server, mobile telephones forming a group that performs PoC communication are registered; a presence server manages, for each mobile telephone, speaking permission and denial states of each mobile telephone in the PoC communication shown in notification from the mobile telephones; the PoC server performs control of PoC communication between the mobile telephones that form the group in the group management server, in accordance with a request to perform PoC communication from a mobile telephone; when a request for a right-to-speak is received from a mobile telephone performing the PoC communication, speaking permission and denial states of each mobile telephone managed by the presence server are referred to; and according to content thereof, speaking for the mobile telephone that has made the request for the right-to-speak is permitted or denied.

## Description

### TECHNICAL FIELD

This invention relates to a right-to-speak control method for PoC (Push To Talk over Cellular) communication in which a right-to-speak can be obtained on a first-come first-served basis when a PTT (Push to Talk) button is pressed.

### BACKGROUND ART

PoC communication uses a mobile telephone network to enable communication between groups, by communication using SIP (RFC 3216), which is an Internet protocol.

In PoC communication it is necessary to obtain a right-to-speak (floor right) in order to speak. The right-to-speak can generally be obtained by pressing a PTT button, and can be obtained on a first-come first-served basis when the PTT (Push to Talk) button is pressed. Confirmation as to whether or not the right-to-speak has been obtained is performed using a presence function for confirming existence of the right-to-speak and participation state of members performing PoC communication.

### DISCLOSURE OF THE INVENTION

### PROBLEMS TO BE SOLVED BY THE INVENTION

In conventional PoC communication protocol, there is a problem in that due to a right-to-speak being on a first-come first-served basis, when rights-to-speak are obtained at the same timing a member cannot obtain a right-to-speak.
As a result there is a problem of members speaking a lot and members speaking little.

Furthermore, when communication is performed in conference mode using PoC, in order to specify a speaker it is necessary to specify by voice as is conventionally done, but at this time, there is a disadvantage in that although the next speaker has been specified another member speaks.

The present invention has been made in view of problems in the conventional technology, and it is an object to realize a system and method in which, in PoC communication, the whereabouts of a right-to-speak is specified, and a right-to-speak based thereon can be controlled.

### MEANS TO SOLVE THE PROBLEMS

According to a first aspect of the invention, a PoC communication system is provided that is characterized by including a presence server for managing a speaking permission/denial state of members participating in the PoC communication, and a PoC server for permitting or denying speaking from a member participating in the PoC communication, by referring to the speaking permission/denial state managed by the presence server.

According to a second aspect of the invention, a speaking control method for a PoC communication system is provided, characterized in that a presence server included in the PoC communication system manages a speaking permission/denial state of members participating in the PoC communication, and a PoC server included in the PoC communication system refers to the speaking permission/denial state managed by the presence server to permit or deny speaking from a member participating in the PoC communication.

According to a third aspect of the invention, a program and a recording medium that has stored the program are provided, the program being a speaking control program for making a server included in a PoC communication system execute a presence process for transmitting a speaking permission/denial state of each member to members participating in PoC communication, and a PoC control process for permitting or denying speaking from a member participating in the PoC communication, by referring to the speaking permission/denial state.

### EFFECTS OF THE INVENTION

An overview of effects of the present invention is described below.
In the present invention configured as described above, whereabouts of right-to-speak in PoC communication is clarified. Furthermore, since speaking permission can be recognized base on the presence, it is possible to prevent competition in speaking.

The present invention can be preferably applied to a conference system in which a conference is made by the PoC communication. In such cases, a member from whom speaking is desired can be explicitly indicated. Furthermore, there is an effect in that it is possible to prevent speaking from a member from whom speaking is not desired.

### BRIEF DESCRIPTION OF THE DRAWING

Fig. 1 is a block diagram showing main parts of a circuit configuration of a mobile telephone as a mobile terminal device according to the present invention.
Fig. 2 is a diagram schematically showing a configuration of a system performing PoC communication.
Fig. 3 is a diagram showing a screen displayed in a display unit 22 by control of a CPU 12 and a display controller 21.
Fig. 4 is a diagram showing a screen displayed in the display unit 22 by control of the CPU 12 and the display controller 21.
Fig. 5 is a diagram showing a screen displayed in the display unit 22 by control of the CPU 12 and the display controller 21.
Fig. 6 is a flowchart showing operations of an example.
Fig. 7 is a flowchart showing operations of the example.
Fig. 8 is a flowchart showing operations of the example.
Fig. 9 is a flowchart showing operations of the example. EXPLANATIONS OF SIGNS

- 11: mobile telephone
- 13: bus
- 12: CPU (central processing unit)
- 14: ROM
- 15: working memory
- 16: LED
- 17: operation key (specifying key)
- 19: key input unit
- 21: display controller
- 22: display unit
- 23: transmitter/receiver

### PREFERRED MODES FOR CARRYING OUT THE INVENTION

A PoC communication system according to a first exemplary embodiment of the present invention is configured by including a plurality of mobile telephones inter-connccted via a network, a presence server, and a PoC server and group management server.

The group management server registers and manages mobile telephones that form a group performing PoC communication.

The presence server manages, for each respective mobile telephone, a speaking permission/denial state for each mobile telephone in the PoC communication shown in notification from the mobile telephones.

The PoC server performs control of PoC communication between the mobile telephones that form a group in the group management server, in accordance with a request to perform PoC communication from the mobile telephones, and when a request for a right-to-speak is received from a mobile telephone performing the PoC communication, refers to a speaking permission/denial state for each of respective mobile telephones managed by the presence server, and according to content thereof, permits or denies speaking for the mobile telephone that has made the request for the right-to-speak.

A PoC communication system according to a second exemplary embodiment of the present invention is configured by including a plurality of mobile telephones inter-connected via a network, a presence server, and a PoC server and group management server.

The group management server registers and manages mobile telephones that form a group performing PoC communication.

The presence server manages, for each respective mobile telephone, states of speaking permission and validity period thereof, and of denial for each mobile telephone in the PoC communication shown in notification from the mobile telephones.

The PoC server performs control of PoC communication between the mobile telephones that form a group in the group management server, in accordance with a request to perform PoC communication from the mobile telephones, and when a request for a right-to-speak is received from a mobile telephone performing the PoC communication, refers to states of speaking permission and validity period thereof, and of denial for each respective mobile telephone managed by the presence server, and according to content thereof, permits or denies speaking for the mobile telephone that has made the request for the right-to-speak.

In either of the abovementioned first and second exemplary embodiments, the PoC server may set (or regard) a mobile telephone making a request to perform the PoC communication as an organizer terminal used by an organizer (organizing party) of the PoC communication, and the presence server may manage speaking permission and denial states for each of respective mobile telephones in the PoC communication by (in accordance to) notification from the mobile telephone that is the organizer terminal.

The organizer terminal can set denial/permission of the abovementioned speaking on a group basis, not an individual (mobile telephone) basis.

Furthermore, the PoC server may record speaking period of time or/and number of times of speaking by a PoC communication member, and when a request for a right-to-speak is received from a mobile telephone performing the PoC communication, in order that the right-to-speak be given equally, under a condition that one of either the speaking time period and the number of times of speaking, or both the speaking time period or the number of times of speaking each being within a respective prescribed threshold (upper limit of number of times of speaking, upper limit of speaking time period) may permit speaking for a mobile telephone that makes a request for the right-to-speak.

Furthermore, the organizer (organizing party) can be set (changed) with regard to PoC communication member(s), and the organizer can set speaking denial/permission.

Next, specific examples of the present invention will be described referring to the drawings.

### EXAMPLE 1

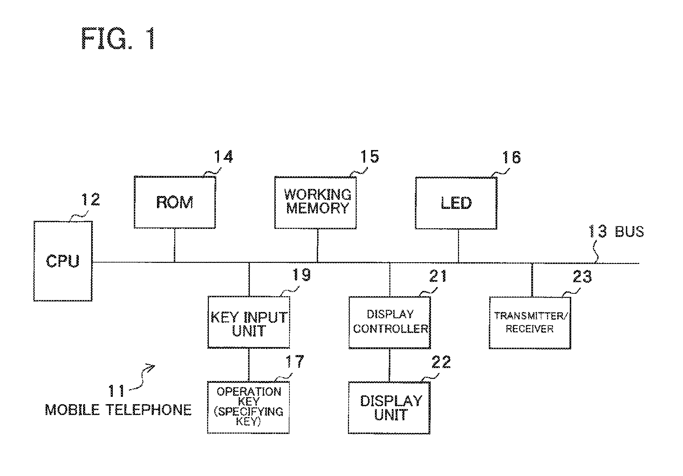

Fig. 1 is a block diagram showing main parts of a configuration of a mobile telephone as a mobile terminal device according to the present invention.

The mobile telephone 11 of the present example is provided with a CPU (central processing unit) 12 connected via a bus 13, a ROM 14, a working memory 15, an LED 16, a key input unit 19, a display controller 21, a transmitter/receiver 23, an operation key (specifying key) 17 connected to the key input unit 19, and a display unit 22 connected to the display controller 21.

The ROM 14 is read-only memory storing fixed data of a dictionary and the like used in Japanese "kana" character conversion and various types of control program for the CPU 12 to execute.

The working memory 15 is configured by RAM (random access memory), and is for storing temporarily required data when the CPU 12 executes a program. Image data for editing when electronic mail is transmitted is also stored in a prescribed region of the working memory 15.

The LED 16 is a device for optically providing notification of received calls and terminal device state.

The key input unit 19 is an input circuit for receiving key input from various types of key including the specifying key 17.

The display controller 21 is a control circuit for controlling display of the display unit 22. The display unit 22 is arranged on a front face of a device main body, not shown in the drawings, and is a black-and-white or color liquid crystal panel or is an organic EL (electroluminescent) display device or the like.

The transmitter/receiver unit 23 is a circuit for performing transmission and reception of data wirelessly. This circuit is used for large communication distances, and is mainly used in communication between the mobile telephone 11 and a base station.

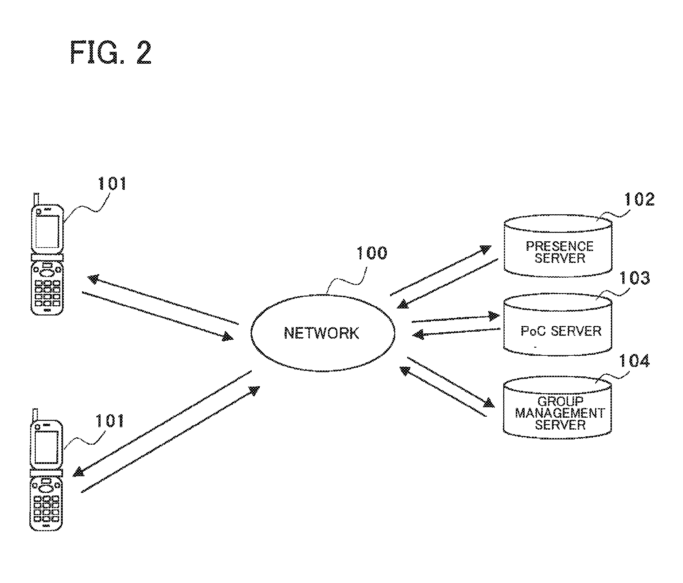

Fig. 2 is a diagram schematically showing a configuration of a system performing PoC communication.

The system shown in Fig. 2 is configured from a network 100, a plurality of mobile telephones 101 that are inter-connected via the network 100, a presence server 102, a PoC server 103, and a group management server 104.

The mobile telephones 101 are terminal devices having a configuration shown in Fig. 1.

The presence server 102 is a server which manages a current state of the mobile telephones 101, and the mobile telephones 101 can notify the state of own mobile telephone (self-state) to the presence server 102, and update the self-state (presence).

The PoC server 103 is a server for controlling PoC communication among the mobile telephones 101, and as a specific function, refers to the presence server 102 to perform communication control such as control of right-to-speak and the like, and changes registration content of the presence server 102 according to a reference result.

The group management server 104 is a server for registering communication party (or parties (partners participants), and can refer to presence of any communication party (participant) that is registered, from the presence server 102.

A mobile telephone 101 can query the group management server 104 and confirm presence of any other mobile telephone(s) 101 registered in the group.

When the PoC communication is started, a communication start request is made to each member by a mobile telephone 101 used by a caller (sender).

The communication start request is notified to terminal(s) used by each member, routing via the PoC server 103 and the group management server 104.

Each terminal that has received the communication start request makes a participation request by user input, if participation is possible, and moves to a communication state.

For each member participating in the communication, a state is notified to each terminal device 101 via the presence server 102.

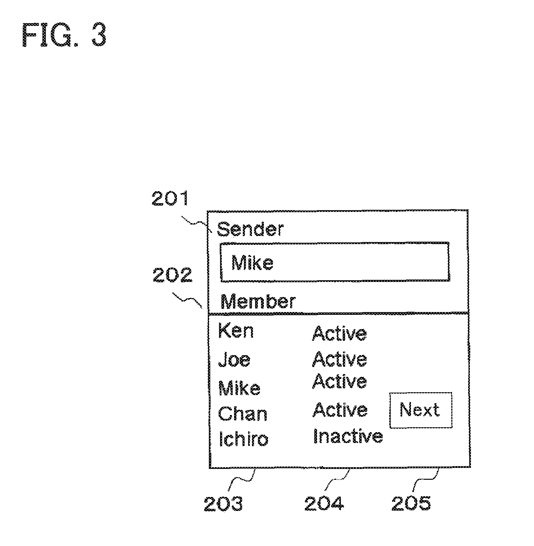

For each state, display/confirmation is possible by presence screens exemplified in Fig. 3 to Fig. 5. In the presence screen shown in Fig. 3, a current speaker is shown in item 201 (as sender), and participating members are shown in item 202 (as member). In item (column) 203 members' names are shown, and in item (column) 204 participation states of members are shown and confirmation of participants is possible. Item 205 shows the next speaker.

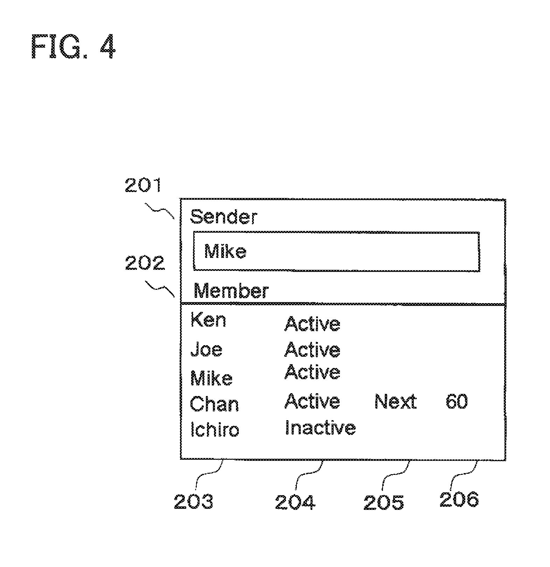

In the presence screen shown in Fig. 4, in addition to display items of Fig. 3 described above, a validity period of speaking permission (item 206) is displayed. This validity period of speaking permission (reference numeral 206) is shown, for example, in the form of a countdown of number of seconds remaining.

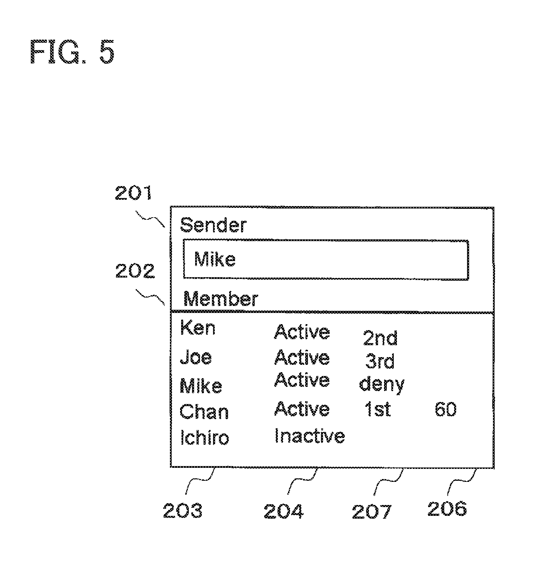

Furthermore, a presence screen shown in Fig. 5 shows a speaking sequence set in an order of "Chan", "Ken", and "Joe". Furthermore, in the example of Fig. 5, it is understood that a right-to-spcak is not given (denied) to "Mike".

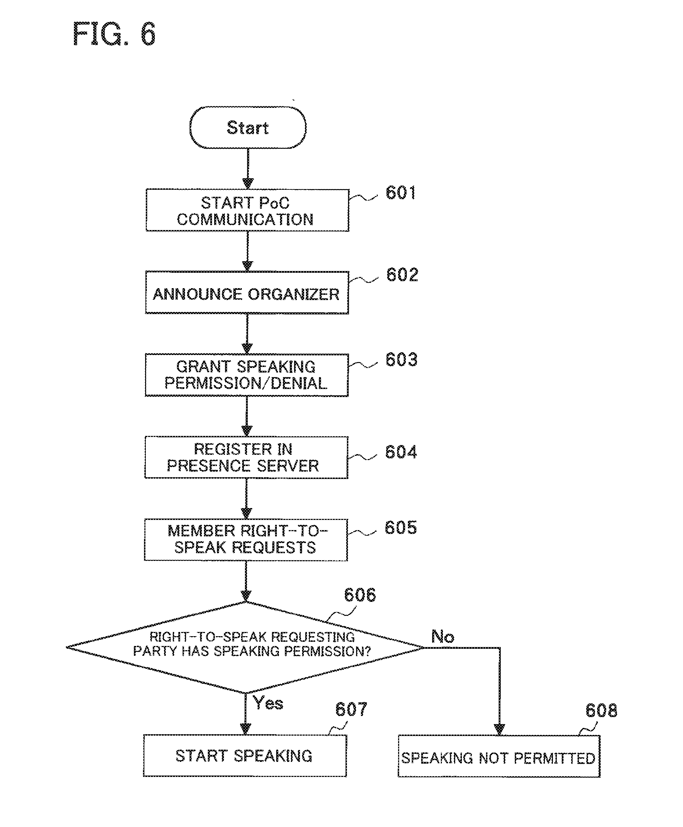

Fig. 6 to Fig. 9 are flowcharts showing operations of the present example, and a description is given below making reference to each figure. In the description below, operations performed by the terminal devices 101 are performed according to input by users of the terminal devices 101, but the description below is given with the terminal devices 101 as actors.

As shown in Fig. 6, when a PoC communication start is requested by any of the terminal devices 101, the PoC server 103 establishes the PoC communication (step 601), and a terminal device 101 that has requested the PoC communication start is set as an organizer (host) terminal used by an organizer (step 602).

Continuing, the organizer terminal sets speaking denial/permission of each participating member (step 603). In the speaking permission, the organizer, using the terminal device 101, and, referring to the display unit 22 in which a speaking permission/denial setting screen similar to the presence screen of Fig. 3 is shown, setting of the next speaker in item 205 is performed, by the operation key 17 and the key input unit 19 shown in Fig. 1,

When the speaking denial/permission of members is set, the organizer terminal gives notification of information of speaking denial/permission to the presence server 102 as presence via the transmitter/receiver 23 and performs registration (step 604).

By registering the presence, permission for right-to-speak is granted to each participating member as shown in Fig. 3. In the example shown in Fig. 3 a display is shown in which the item 205 (Next) is highlighted for "Chan", to indicate that speaking permission is granted.

Here, notification may be made by the LED 16 shown in Fig. 1 with regard to a member to whom speaking permission has been granted. When (display of) the notification is performed by the LED 16, it is possible to confirm speaking permission even in cases such as when the display unit cannot be seen in a foldable terminal.

The screen shown in Fig. 3 shows speaking permission by the item 205, but it is also possible to show the validity period of speaking permission as shown by "60 (seconds)" in item 206 of Fig. 4. In addition, speaking order or speaking denial can be notified by a display of "1st", "2nd", "3rd", and "deny", as shown in item 207 of Fig. 5.

In item 205 of Fig. 3, speaking permission is given to "Chan" for which "Next" is displayed, and speaking is possible only in cases in which "Chan" has made a speaking request.

On the other hand, since speaking permission is not given to "keen" or "Mike" shown in Fig. 3, a right-to-speak cannot be obtained even if a request to speak is made. The validity period of the speaking permission is managed by the presence server 102.

The presence display shown in Fig. 3 to Fig. 5 is displayed in the display unit 22 by control of the CPU 12 and the display controller 21 as described above, but the CPU 12 and the display controller 21 perform control by referring to registration content of the group management server 104 which obtains presence of any other communication party (member) from the presence server 102.

After that, the PoC server 103 which has received a request for a right-to-speak from a member (step 605) confirms whether a party that has made the request for a right-to-speak has speaking permission by referring to the presence server 102 (step 606), and in cases in which speaking permission is registered, permits speaking, and speaking by the party that has made the request for a right-to-speak is started (step 607). In cases in which it is confirmed in step 606 that speaking permission is not registered, speaking is not permitted (step 608).

### EXAMPLE 2

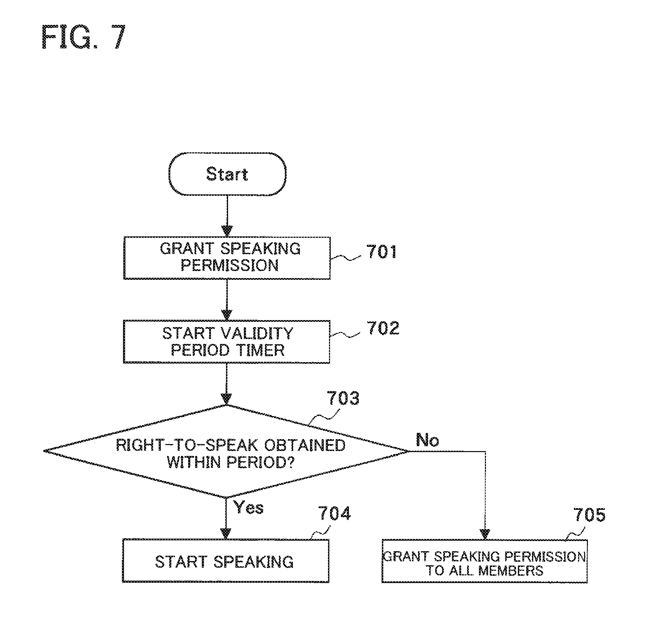

A flowchart shown in Fig. 7 shows characteristic operations of an example in which validity period of speaking permission is controlled.

When a user of an organizer (host) terminal sets speaking denial/permission for each participating member (step 701 (step 603 in Fig. 6)), and performs input to set the validity period (timer), information of speaking denial/permission and the timer being set is notified to a presence server 102, as a presence via a transmitter/receiver 23.

In the presence server 102 that has received the abovementioned notification, information of speaking denial/permission is set and also a validity period timer (not shown in the drawings) is started up (step 702), Information of speaking denial/permission set when this validity period timer is in a count down state is valid.

After that, the PoC server 103 that has received a request for a right-to-speak from a member, by referring to the presence server 102, confirms whether a party who has made a request for the right-to-speak has speaking permission and whether the validity period timer is within the period (step 703), and in cases in which the speaking permission is registered and the validity period timer is within the period, permits speaking, and speaking by the party that has made the request for the right-to-speak starts (step 704). In cases in which at least one of speaking permission not being registered in step 703 or a limit of the validity period timer being passed is confirmed, registration content of the presence server 102 is changed to grant speaking permission to all members (step 705).

### EXAMPLE 3

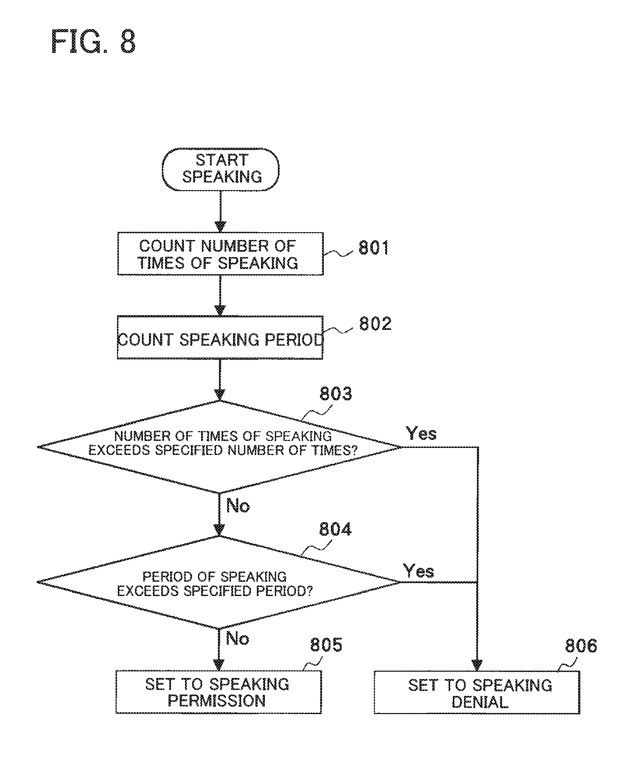

Fig. 8 is a flowchart showing characteristic operations of an example in which speaking permission is automatically granted based on number of times of speaking and speaking period of time (may be termed "speaking period") without arranging an organizer.

The number of times of speaking and the speaking period are prescribed for each member in a PoC server 103, and initially registration content of a presence server 102 is changed so as to grant speaking permission for all members. When PoC communication is established by PoC communication being started, and each member speaks, the PoC server 103 counts the number of times of speaking and the speaking period (steps 801, 802), and confirms whether the number of times of speaking exceeds a prescribed number, and whether the speaking period exceeds a prescribed period (steps 803, 804). In cases in which both of these are within what is prescribed, the registration content of the presence server 102 is such as to grant speaking permission to that member (step 805), and in cases in which either exceeds what is prescribed, the registration content of the presence server 102 is such as to deny speaking for that member (step 806).

The arrangement is such that the number of times of speaking and the speaking period are prescribed, but either one thereof is also possible.

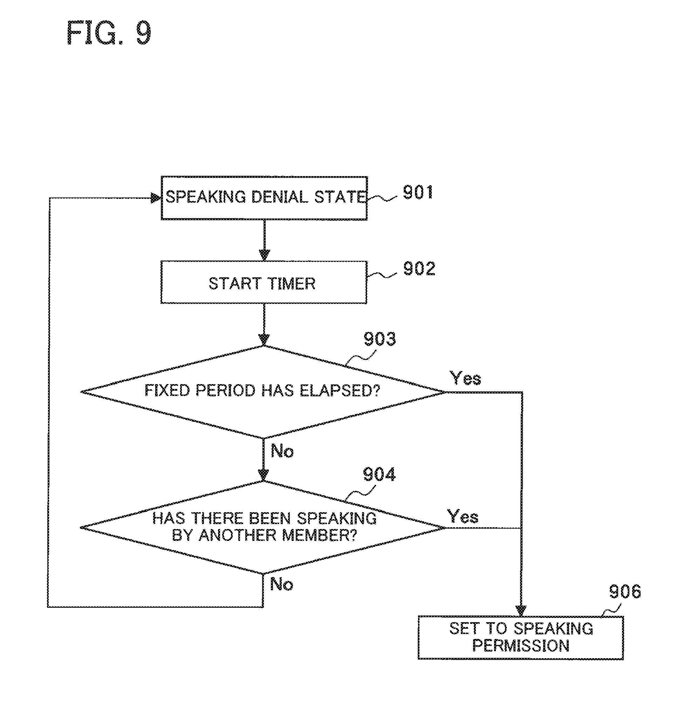

Fig. 9 is a flowchart showing operations in which speaking is denied for a member for whom speaking is set to be denied in step 805 [sic. 806] of the flowchart shown in Fig. 8.

The PoC server 103, after denying speaking for a member whose speaking has exceeded the prescribed number of times or period (step 901 (step 805 in Fig. 8)), starts up the timer (not shown in the drawings) (step 902), and performs confirmation of whether a fixed period of time has elapsed (step 903), and confirmation as to whether any other member has spoken (step 904). In cases in which the fixed period has elapsed and any other member has spoken, registration content of the presence server 102 is made such as to grant speaking permission to that member (step 906).

The arrangement is such that confirmation as to whether the fixed period has elapsed and confirmation as to whether any other member has spoken are performed, but confirmation of either one of these may be done.

Furthermore, speaking permission is given on a member basis, but this may also be set on a group basis. In such cases, speaking and discussion are performed by a certain group, and other groups only listen.

In addition, speaking permission may be displayed in an order as shown in Fig. 5. Such cases are useful when speaking in order.

Operations of the abovementioned examples can be executed in combinations, and the present invention includes configurations in which each of the examples are combined.

Modifications and adjustments of the exemplary embodiments and examples are possible within the entire disclosure (including the claims) of the present invention based on fundamental technological ideas thereof. Furthermore various types of combinations and selections of various disclosed elements are possible within the scope of the claims of the invention.

## Claims

1. A PoC communication system **characterized by** comprising:
a presence server for managing a speaking permission/denial state of members participating in PoC communication; and
a PoC server for permitting or denying speaking from a member participating in said PoC communication, by referring to said speaking permission/denial state managed by said presence server.

2. The PoC communication system according to claim 1 **characterized in that:**
said presence server additionally manages a validity period of speaking permission; and
said PoC server refers to said speaking permission/denial state and said validity period of speaking permission managed by said presence server to permit or deny speaking from a member participating in said PoC communication.

3. The PoC communication system according to claim 1 or 2 further **characterized in that:**
a group management server for registering mobile telephones which form a group performing PoC communication is connected; and
said PoC server performs control of PoC communication between said mobile telephones which form the group in said group management server, in accordance with a request to perform PoC communication from said mobile telephones.

4. The PoC communication system according to any of claims 1 through 3 **characterized in that:**
said PoC server sets a mobile telephone that makes a request to perform said PoC communication as an organizer terminal used by an organizer of said PoC communication, and said presence server manages speaking permission and denial states for each respective mobile telephone in said PoC communication by notification from said mobile telephone that is said organizer terminal.

5. The PoC communication system according to any of claims 1 through 4 further **characterized in that**:
said PoC server records at least one of speaking time period and number of times of speaking in which speaking is performed by each mobile telephone, and when a request for a right-to-speak is received from a mobile telephone performing said PoC communication, with at least one of the speaking time period or number of times of speaking recorded for said mobile telephone being within a prescribed threshold as a condition, speaking by said mobile telephone that makes the request for said right-to-speak is permitted.

6. A speaking control method for a PoC communication system **characterized in that:**
a presence server included in said PoC communication system manages a speaking permission/denial state of members participating in said PoC communication; and
a PoC server included in said PoC communication system refers to said speaking permission/denial state managed by said presence server to permit or deny speaking from a member participating in said PoC communication.

7. The speaking control method for said PoC communication system according to claim 6 **characterized in that**:
said presence server additionally manages a validity period of speaking permission; and
said PoC server refers to said speaking permission/denial state and said validity period of speaking permission managed by said presence server to permit or deny speaking from a member participating in said PoC communication.

8. The speaking control method for said PoC communication system according to claim 6 or 7, wherein:
with setting a mobile telephone that makes a request to perform said PoC communication as an organizer terminal used by an organizer of said PoC communication, said presence server manages speaking permission and denial states for each respective mobile telephone in said PoC communication in response to notification from said mobile telephone that is said organizer terminal.

9. The speaking control method for said PoC communication system according to any of claims 6 through 8 **characterized in that**:
said PoC server records at least one of speaking time period and number of times of speaking in which speaking is performed by each mobile telephone, and when a request for a right-to-speak is received from a mobile telephone performing said PoC communication, with at least one of said speaking time period or number of times of speaking recorded for said mobile telephone being within a prescribed threshold as a condition permission is given for, speaking by said mobile telephone that makes the request for said right-to-speak.

10. A speaking control program in a server included in a PoC communication system, said program causing said server to execute:
a presence process for transmitting a speaking permission/denial state of each member to members participating in PoC communication; and
a PoC control process for permitting or denying speaking from a member participating in said PoC communication, by referring to said speaking permission/denial state.
